# EUROPEAN PATENT SPECIFICATION

(11) **EP 1 331 571 B1**
(45) Date of publication and mention of the grant of the patent: **23.11.2005**
(21) Application number: 03002068.9
(22) Date of filing: 29.01.2003
(51) Int. Cl.: G06F 13/38, H04L 29/06

(54) **System and method for enabling arbitrary components to transfer data between each other**
System und Verfahren um den Transfer von Daten zwischen beliebigen Komponenten untereinander zu ermöglichen
Système et procédé pour permettre le transfert de données entre des composants arbitraires

(30) Priority: 29.01.2002 US 58268
(43) Date of publication of application: 30.07.2003
(73) Proprietor: Xerox Corporation, Rochester, New York 14644 (US)
(72) Inventor: Edwards, Keith W., San Francisco, CA 94110 (US); Newman, Mark W., San Francisco, CA 94110 (US); Sedivy, Jana Z., Stanford, CA 94305 (US)
(74) Representative: Grünecker, Kinkeldey, Stockmair & Schwanhäusser Anwaltssozietät

(56) References cited:
- EP-A- 0 685 952
- DE-A- 4 106 793
- US-A- 5 915 252

## Description

This invention relates generally to communication systems and methods and, more particularly, to a system and method for enabling arbitrary components to transfer data between each other using one or more universal data transfer interfaces employing mobile code.

In data communication environments, such as a distributed network, many different vendors provide a number of products for specific services. Heretofore, a predetermined set of domain specific protocols has been required to be specified to enable arbitrary components in the environment to communicate with each other, assuming the components were transmitting or receiving data, hereinafter referred to as ("transferring data"). For example, a device manufactured by one vendor would have difficulty communicating with a device manufactured by another vendor without using the predetermined set of protocols mentioned above. The problem of different vendors requiring different predetermined protocols has been partially dealt with by adopting existing protocol standards. However, there are different standards organizations and thus different protocol standards.

When arbitrary components such as computer applications or programs, data, memory, file directories, individual files, printer devices, cellular telephones, facsimile machines, copier machines, scanner devices, desk-top computers, lap-top computers, personal digital assistant ("PDA") systems, or any other device, for example, attempt to communicate without having a priori knowledge of each other, particular domain-specific protocols, such as the file system domain (e.g., NFS and CIFS) or the printer domain (e.g., IPP and LPR), must be known a priori by both parties to successfully communicate. An arbitrary component, such as a PDA attempting to communicate with a file system, or a printer device attempting to do the same, must be explicitly programmed to understand one or more of the standardized protocols mentioned above. An example includes a computer device or application having to be programmed to understand a printer device by installing a domain-specific printer driver. If the device or application is programmed to understand how to communicate and use a printer device, generically, the driver will only enable the device or application to access a particular type of printer device and not the universe of all printer devices. Thus, when new and unknown components enter the equation, the application must be reprogrammed to understand the new standardized protocols used to communicate with the new components. Referring to the above computer and printer device example, if a new type of printer were introduced, the computer device would have to be re-programmed to be able to transfer data with the new printer device by installing a printer driver specific to the new printer device. Thus, each application must be explicitly written to use a particular set of standardized protocols a priori to communicating with the components associated with the protocols.

In a system such as Jini™, developed by Sun Microsystems of Palo Alto, California and described in "A collection of Jini™ Technology Helper Utilities and Services Specifications," Palo Alto, California, Sun Microsystems, Inc., pp. 1-214, 2000; and "Jini™ Technology Core Platform Specification," Palo Alto, California, Sun Microsystems, Inc., pp. 1-126, 2000, all of which are hereby incorporated by reference in their entirety, which uses domain-specific interfaces, in order for a component such as a PDA system to communicate with another component such as a printer, the PDA system must contain a priori knowledge of the semantics of the printer's programmatic interfaces. In other words, a component that knows how to print still might not know how to transfer data between a file system, a scanner device or a network translation service until it is explicitly programmed to know how to communicate with the interface for the particular components.
DE 41 06 793 A1 discloses a communication interface for an open communication of users with components of a distributed communication system having a layered structure. The communication interface is based on a macro library and comprises different groups of procedures like initialisation and termination of a communication, opening or closing a logic communication channel, building up or closing down a connection and serving incoming information.
US 5,915,252 discloses an object oriented framework mechanism for data transfer between a data source and a data target, providing an infrastructure that embodies the steps necessary to perform the data transfer and a mechanism to extend the framework to fit a particular data transfer environment. Certain core functions are provided by the framework, which interact with extensible functions provided by the framework user.
EP 0 685 952 A1 discloses a multi-path channel interface for computer input-output systems, which includes the ability to define and activate unbalanced groups of unidirectional communications sub-channels for a user application. Protocol independent exchange identifications permit not only unbalanced transmission groups but also allow user-controlled extensions for negotiating the values of transmission parameters at the time the transmission group is activated.
It is an object of the present invention to provide an improved system and method enabling components to transfer data between each other.
This object is achieved by a system according to claim 1 and by a method according to claim 7. Advantageous embodiments are subject matter of the dependent claims.

The present invention mallows components using the same or different communications protocols and/or data types to transfer data between each other without having a priori knowledge of any domain-specific interfaces, protocols or data formats. In addition, the invention enables components to initiate data transfer sessions between other components.

FIG. 1 is a diagram of a system for enabling arbitrary components to transfer data between each other ;

FIG. 2 is a block diagram of an exemplary arbitrary component utilized in the system for enabling arbitrary components to transfer data between each other;

FIG. 3 is a diagram of a system for enabling one arbitrary component to receive data from another arbitrary component;

FIG. 4 is a flow chart of a process for receiving data from another arbitrary component;

FIG. 5 is a diagram of a system for enabling one arbitrary component to transmit data to another arbitrary component;

FIG. 6 is a flow chart of a process for transmitting data to another arbitrary component;

FIG. 7 is a block diagram of a system where one arbitrary component enables two other arbitrary components to transfer data between each other ; and

FIG. 8 is a flow chart of a process where an arbitrary component enables other arbitrary components to transfer data between each other.

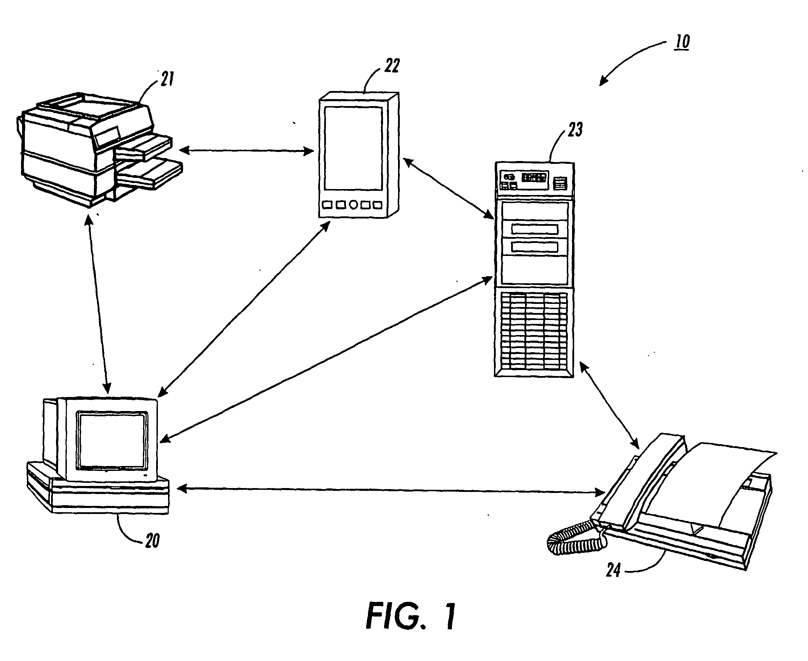

A system 10 for enabling arbitrary components to transfer data between each other is shown in FIG. 1. In this particular embodiment, system 10 includes computer 20, printer 21, personal digital assistant ("PDA") 22, server 23 and facsimile machine 24 ("components 20-24"). A method in accordance with one embodiment includes computer 20 obtaining one of the universal data transfer interfaces (i.e., the data source interface or the data sink interface) associated with one or more of components 21-24, and invoking the one or more obtained universal data transfer interfaces to transfer data between components 20-24. The present invention allows components 20-24 using the same or different communication protocols and/or data types to transfer data between themselves without having a priori knowledge of any domain-specific interfaces, protocols or data formats. The present invention also enables components 20-24 to initiate data transfer sessions between other components 20-24.

Referring more specifically to FIG. 1, computer 20 is operatively coupled to each of the components 21-24 in this illustrative example, although other coupling arrangements or configurations can be used as well as greater or lesser numbers of components. For example, system 10 could comprise one or more of the components 21-24 directly coupled to one or more of the other components 21-24 (e.g., a peer-to-peer system) or system 10 could comprise components 20 and 21, which are coupled together.

A conventional dial-up communication system through private branch exchanges ("PBX") and using public switched telephone lines and line based telephone communication protocols may be used by components 20-24 to communicate with each other. Although one type of communication system and protocol is shown, a variety of different types of communication systems and/or protocols may be used. For example, communication systems or network architectures, such as local area networks ("LAN"), wide area networks ("WAN") and cellular or satellite communications network systems that utilize signals, such as satellite signals, radio waves, microwaves and/or infrared signals, can be used. Additionally, a variety of communication protocols for transferring data, such as xDSL, ISDN, TCP/IP or protocols defined by the RFC and OSI organizations can also be used. The type of protocol used will depend upon the type of communication system being used by a particular component, the type of component (e.g., a printer device or a scanner device) and/or the type of network environment the component is operating in (e.g., the UNIX operating environment). Components 20-24 may use one or more communications protocols. Moreover, the arrows in FIG. 1 depict the flow of communications between components 20-24.

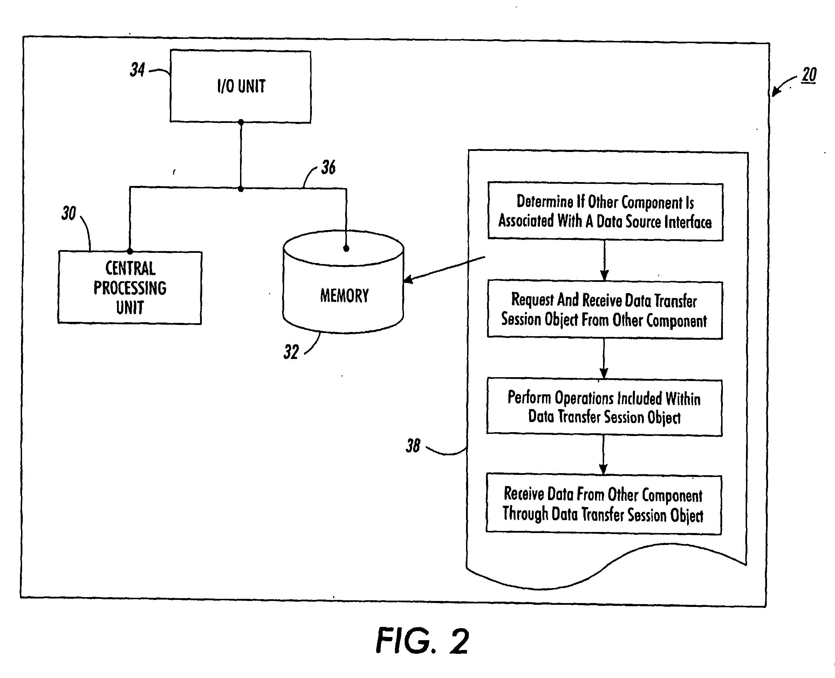

Referring to FIG. 2, computer 20 comprises a central processing unit ("CPU") 30, memory 32 and I/O unit 34, which are coupled together by a bus 36, although computer 20 may comprise any type of device or system that can store, process and execute instructions for performing one or more methods of the present invention. By way of example only, computer 20 may also comprise a scanner, cellular telephone, display device, video input/output device, audio input/output device, remote control device or an appliance. Computer 20 could also comprise any type of device with circuitry that is hard-wired to execute instructions for performing one or more methods of the present invention. Computer 20 executes instructions for an operating system environment it is operating in, such as the UNIX® environment, as described in "Advanced Programming in the UNIX® Environment," W. Richard Stevens, Addison-Wesley Publishing Company, 1974, which is hereby incorporated by reference in its entirety. In this embodiment, computer 20 does not use the same communication protocol as any of the other components 21-24, but in other embodiments computer 20 does use the same communication protocol as any of the other components 21-24. By way of example only, computer 20 may be operating in the UNIX® environment using a first type of communication protocol to transfer data, while printer 21 may be operating in a Microsoft Windows® environment, but using a second type of communication protocol.

CPU 30 may comprise a processor, such as an Intel Pentium III processor. The CPU 30 executes at least one program of stored instructions for a method for enabling arbitrary components to transfer data between each other in accordance with the present invention as described and illustrated herein. CPU 30 may also execute instructions for other tasks, including network services, such as providing data, memory, file directories, individual files, word processing applications, accounting applications or engineering applications. As a result, when one of these applications is executed, the instructions for the task, such as for creating a spreadsheet, as well as the instructions for performing one or more of the methods of the present invention are carried out by the CPU 30 in computer 20. The instructions may be expressed as executable programs written in a number of computer programming languages, such as BASIC, Pascal, C, C++, C#, Java, Peri, COBOL, FORTRAN, assembly language, machine code language, or any computer code or language that can be understood and performed by the CPU 30.

Memory 32 may comprise any type of fixed or portable memory device accessible by the CPU 30, such as hard-disks, floppy-disks, compact disks ("CD"), digital video disks, magnetic tape, optical disk, ferroelectric memory, read only memory, random access memory, electrically erasable programmable read only memory, flash memory, erasable programmable read only memory, static random access memory, dynamic random access memory, ferromagnetic memory, charge coupled devices, smart cards, or any other type of computer-readable mediums. Memory 32 stores instructions 38 for a method of enabling arbitrary components to transfer data between each other in accordance with one embodiment of the present invention for execution by CPU 30, although some or all of these instructions can be stored elsewhere. One or more sets of universal interfaces or data objects may be stored in memory 32 so they can be retrieved as needed by the CPU 30 during operation of the present invention as will be described in further detail herein. Although in this illustrative example the CPU 30 and memory 32 are shown in the same physical location, they may be located at different physical locations, such as in server 23 shown in FIG. 1.

Computer 20 may communicate with components 21-24 using I/O unit 34. In this illustrative example, I/O unit 34 may comprise a router such as any type of Ethernet based device having sufficient ports to operatively couple computer 20 to components 21-24.

Referring back to FIG. 1, printer 21 comprises a conventional printing device capable of rendering graphical representations on a printing medium, for example. Since devices such as printer 21 are well known in the art, the specific elements, their arrangement within printer 21 and operation will not be described in detail here.

PDA 22 comprises a conventional hand held device that may perform such functions as telephony, facsimile transmissions or networking. Since devices such as PDA 22 are well known in the art, the specific elements, their arrangement within PDA 22 and operation will not be described in detail here.

Server 23 comprises a conventional computer system having one or more CPU's, memory, I/O units and one or more storage mediums, which are coupled together by a bus and used by server 23 to store and process instructions in accordance with one or more alternatives as described further herein. Since devices such as server 23 are well known in the art, the specific elements, their arrangement within server 23 and operation will not be described in detail here.

Facsimile machine 24 comprises a conventional facsimile device that can send and receive pictures or text over a telephone line or network. Since devices such as facsimile machine 24 are well known in the art, the specific elements, their arrangement within facsimile machine 24 and operation will not be described in detail here.

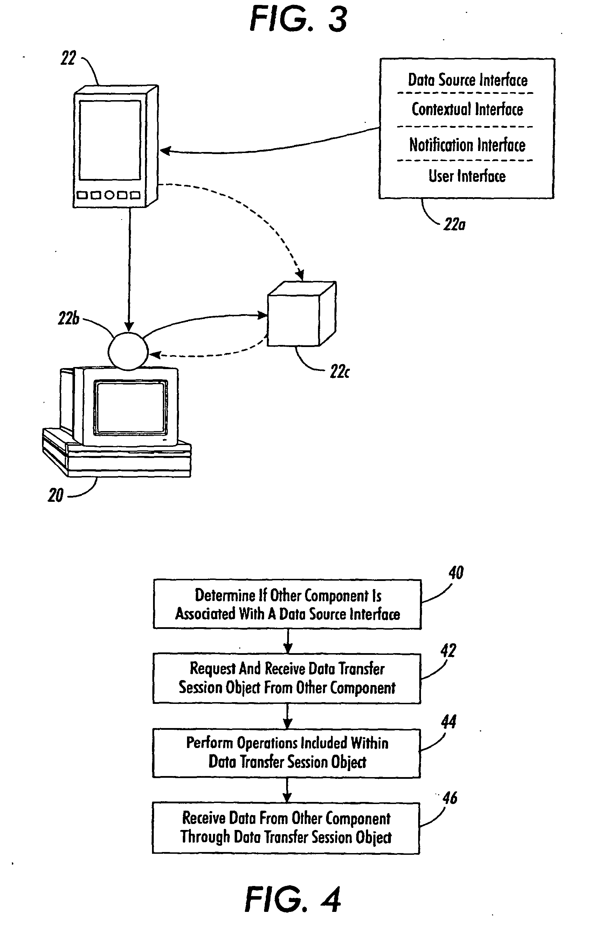

Referring to FIG. 3, computer 20 is coupled to PDA 22 as described above in connection with FIG. 1. PDA 22 has stored in a memory, or otherwise has access to by accessing server 23, for example, which will hereinafter be referred to as being "associated with," a set of universal interfaces 22a comprising a data source interface, a contextual interface, a notification interface and a user interface. The particular number and/or combination of interfaces may vary and will depend upon the particular type of device PDA 22 is, and the capabilities and/or services desired or provided by it. Also, PDA 22, and hence the set of universal interfaces 22a, may be updated at any time to add, delete or modify interfaces. Further, computer 20 is programmed to access the interfaces associated with PDA 22. Likewise, PDA 22 could access one or more interfaces (not illustrated) associated with computer 20.

Computer 20 may access the set of universal interfaces 22a through data object 22b to effect different types of communications as described herein. Each of the interfaces in the set of universal interfaces 22a comprise instructions, sets of operations and/or other data that can be understood and performed by computer 20 to enable it to communicate and transfer data (i.e., transmitting or receiving data) with PDA 22, exchange contextual information with PDA 22, provide computer 20 with event notifications for PDA 22, or enable computer 20 to receive user interfaces to allow users of computer 20 to access and/or manipulate PDA 22. In general, each interface in the set of universal interface 22a is not domain-specific with respect to PDA 22.

In particular, the data source interface includes several operations such as a getSourceDataFlavor() operation and a beginTransferSession() operation. Further, the data source interface includes instructions and data that can be performed by computer 20 to establish a data transfer session to enable computer 20 to receive data from PDA 22. The getSourceDataFlavor() operation includes instructions and data that may be performed by computer 20 for determining the types of data PDA 22 can transmit. In this illustrative example, computer 20 performs the getSourceDataFlavor() operation that returns a list of one or more data types supported by PDA 22. Moreover, the data types in this embodiment are typically MIME data types. For example, after performing the above-mentioned operations, computer 20 may determine that PDA 22 supports data in a "JPEG" format. The beginTransferSession() operation includes instructions and data that may be performed by computer 20 to request PDA 22 to establish a data transfer session to receive data by returning a data transfer session object 22c to computer 20 through data object 22b. Moreover, the beginTransferSession() operation may be passed parameters when invoked such as a context parameter, an initial lease duration parameter and a data flavor parameter. In this embodiment, computer 20 passes a context parameter to the beginTransferSession() operation when invoking it to inform PDA 22 of its identity for a variety of reasons, such as for identifying computer 20 to PDA 22, identifying a user at computer 20 to PDA 22, identifying the location of computer 20 on a network to PDA 22 or for security purposes. PDA 22 may decide whether to transmit data to computer 20 based upon the identity information provided in the context parameter. Further, data transfer sessions are leased and would thus need to be renewed periodically by computer 20 at intervals of time corresponding to a value specified in the initial lease duration parameter passed to the beginTransferSession() operation to keep the data transfer session active, although in other alternatives the sessions need not be leased. Where sessions are leased, if computer 20 fails to renew the lease PDA 22 will stop transmitting data to computer 20 under the assumption that computer 20 has failed to renew the lease because it has either crashed or has otherwise become unreachable. In addition, if PDA 22 supports one or more types of data, as determined by performing the getSourceDataFlavor() operation, a data flavor parameter may be passed into the beginTransferSession() operation. Computer 20 may provide a preferred data type value to the data flavor parameter for a number of reasons, such as in the event computer 20 and PDA 22 support multiple, compatible data types where computer 20 specifies, using the parameter, a preferred data type for the data transfer. In this example, computer 20 may determine a preferred data type using a number of methods such as enabling users at computer 20 to indicate preferred data types, randomly selecting one of the compatible data types between computer 20 and PDA 22 or selecting the data type that will be most efficient for the particular data being transferred.

The contextual interface comprises a getContext() operation that includes instructions and data that can be performed by computer 20 for retrieving contextual information from PDA 22. In this embodiment, the contextual information is stored in a memory at PDA 22 as a multi-valued data structure that resembles a hash table, although the contextual information can be stored in any other format. Also in this example, the contextual information includes information about PDA 22 such as what type of device it is, its operating status, identity, location, administrative domain, or any other type of environment data. In another embodiment, the contextual information may be stored at another physical location such as server 23.

The notification interface includes a register() operation, which may be passed one or more parameters and performed by computer 20 to enable it to receive asynchronous notifications about events generated by PDA 22, although it may receive synchronous notifications as well. Computer 20 performs the register() operation, passing to it a context parameter, a component parameter and an initial lease duration parameter. The context parameter provides PDA 22 with the identity of computer 20 for a number of reasons, such as enabling PDA 22 to decide whether it would desire sending notifications to computer 20 for security purposes or record keeping. The component parameter identifies computer 20 as desiring to be notified of events occurring at PDA 22. Further, event registrations are leased and must be renewed periodically by computer 20 at intervals of time corresponding to the value specified in the initial lease duration parameter to keep the event registration active. If computer 20 fails to renew the lease, the notification interface includes instructions for relieving PDA 22 of its obligation to provide computer 20 with notifications about generated events since it will assume that computer 20 has failed to renew the lease because it has either crashed or has otherwise become unreachable. Once computer 20 has registered itself with PDA 22 by performing the register() operation, if a condition occurs in PDA 22 that should cause it to notify computer 20 according to the instructions provided in the notification interface and associated operations, PDA 22 will send an event notification object to computer 20. Computer 20 may then generate a user window, as described further herein below, to display the event information to a user. For example, if PDA 22 instead was a printer device and computer 20 instead was a word processing application, PDA 22 would be able to provide computer 20 with an event notification in the case where paper in the printer device jammed. Moreover, in this example, computer 20 could display the event notification (i.e., paper jam) to the user using a graphical user interface ("GUI").

The user interface comprises a getUl(), getState() and setState() operation that includes instructions and data that can be performed by computer 20 for retrieving or generating a user window specific to PDA 22 to provide users of computer 20 with so they can access and/or manipulate PDA 22 to take advantage of additional functionality of PDA 22. In this embodiment, the getUl() operation can be passed parameters when invoked by computer 20 to indicate which type of user window the user would like generated, as described in further detail herein. The getUI() operation returns to computer 20, from PDA 22, a user window and/or instructions for generating or retrieving a user window, which may be instantiated by computer 20 to display the user window to users, for example. The getState() operation includes instructions and data for requesting that a state token object be returned to computer 20 from PDA 22. The state token object may be an opaque object with respect to computer 20, which is particular to PDA 22 and further may encapsulate the current state (e.g., device settings or configuration) of PDA 22, although the state token object may be transparent with respect to computer 20 in a case where computer 20 is able to understand the state token object of PDA 22. Further, PDA 22 may use different types of state token objects depending upon the particular type of device it is (e.g., a printer device or word processing application). Still further, PDA 22 may encode its respective state token objects in various ways, such as pointers or URLs pointing to particular configurations. Alternatively, the state token objects may include a representation of the current state of PDA 22. Additionally, the setState() operation includes instructions and data that may be performed by computer 20 for generating the user window using the configuration data included in the state token object. Computer 20 may pass the state token object as a parameter to the setState() operation when it is invoked, which can be used by PDA 22 to return instructions and data that can be performed by computer 20 for retrieving or generating the user window having the stored configuration included in the state token object. The setState() operation may also be invoked by computer 20 to reset the state of PDA 22 without having to recreate the user window for the user.

Each of the above-described interfaces and associated operations therein, as well as any others that may be subsequently described herein, comprise mobile code. Mobile code is executable data that can be transmitted to computer 20 where it is executed. For example, Java is an implementation of executable content (i.e., mobile code) that is widely used on the Internet. Users can download the mobile code from the Internet, for example, and locally run a program written in a truly common programming language. In this embodiment, the mobile code is object oriented mobile code, which is a programming methodology that is well known in the programming arts, where data types may be defined along with associated procedures or sets of instructions, the data types in this context often referred to as classes. Thus, a set of procedures or instructions may be associated with one or more data types. Moreover, the same name or identifier can be assigned to identify a procedure or a set of instructions that perform corresponding instructions depending upon the particular data types associated therewith, often referred to as polymorphism. Thus, for exemplary purposes only, a draw procedure could be performed to draw circles or rectangles depending upon the type of data provided, or passed, to the procedure when it is invoked. Further in this example, if a circle data type defines a radius coordinate, for example, and a draw procedure is invoked and the circle data type is passed to the draw procedure, the draw procedure, inheriting any other data types associated with the draw procedure, can use the data provided thereto to perform the appropriate procedure or sets of instructions to draw a circle. In this embodiment, when the set of universal interfaces 22a is provided to computer 20, the procedures, sets of instructions and other data associated with the particular interface become available to computer 20 to access and perform, as will be described further herein. Moreover, variables, parameters and data may be passed or provided to the universal interfaces that will be understood and utilized accordingly by computer 20, depending upon the particular type of communication desired. Still further, the interfaces may comprise sets of instructions or references to other interfaces, wherein computer 20 could utilize the data or perform the instructions accordingly.

Computer 20 may also directly access each of the interfaces included in the set of universal interfaces 22a without needing to obtain data object 22b to effect the different types of communications described herein. Moreover, each of the interfaces in the set of universal interfaces 22a would comprise the same instructions, sets of operations and/or other data that could be understood and performed by computer 20 to enable it to communicate and transfer data with PDA 22 as well as the other functions described above. Therefore, mobile code may not be required in this example, although it could be used as necessary such as where data is being transferred.

In this illustrative example, data object 22b is received from PDA 22 and stored in computer 20, although the data object 22b could be stored elsewhere, such as server 23. The set of universal interfaces 22a is accessible to computer 20 through the data object 22b. More specifically, data object 22b supports the various operations defined by the interfaces associated with PDA 22, which are assumed to be known and understood by computer 20. The data object 22b comprises instructions (i.e., computer executable code) and/or data that provide particular implementations of the one or more interfaces associated with the PDA 22 from which the data object 22b is associated with. For example, data object 22b as provided by PDA 22 to computer 20 would provide a custom implementation of the data source interface that would be specialized to communicate with PDA 22 using whichever protocols and/or data formats have been decided upon by the developer of PDA 22.

In this illustrative example, the data transfer session object 22c includes a getTransferData() operation, a getDataSource() operation, an abort() operation, a fail() operation, a completed() operation, the register() operation associated with the notification interface described above, a getLease() operation, a getViewer() operation, a getEditor operation, a getPrinter() operation, as well as any other instructions needed to enable computer 20 to receive data from PDA 22, including protocols for video or file transfer, for example, which may depend upon the type of data being received. Data transfer session object 22c includes the above-mentioned operations and instructions that are particular to PDA 22, but may be performed by computer 20 to receive data. In an alternative where computer 20 (i.e., a data sink component) receives data from PDA 22 (i.e., a data source component), for example, computer 20 invokes the getDataTransfer() operation to actually retrieve the data from PDA 22. Further, computer 20 may invoke the getDataSource() operation to determine the identity and other attributes of PDA 22. Computer 20 may also invoke the getDataSource() operation to determine whether it should modify its behavior during data transfers or whether it should even allow certain data transfers to occur.

In this illustrative example, computer 20 does not need to know details with respect to how to receive and understand the data sent from the PDA 22 through the data transfer session object 22c. In particular, the instructions and various operations included within data transfer session object 22c include information regarding the specific protocols, mediums and types of data that are particular to PDA 22, which may be executed by computer 20 to be able to receive and understand data transferred from PDA 22, even though PDA 22 may utilize different protocols, mediums or types of data. Furthermore, data transfer session object 22c includes instructions for enabling computer 20 to negotiate with PDA 22 during the transfer of data to select a communications protocol or medium to use to transfer data between each other based upon the type of data being transferred. The instructions may also enable computer 20 and PDA 22 to negotiate with each other for using different protocols for the data transfer session based upon the type of data being transferred. Moreover, the instructions may enable computer 20 to modify the format or the content of data being transferred through the data transfer session object 22c to convert the data as necessary from a first data transfer protocol associated with computer 20 to a second data transfer protocol associated with PDA 22. For example, if PDA 22 is transferring streaming video to computer 20, then it may be more efficient for PDA 22 to transfer the data using compression or progressive encodings. Computer 20 could perform the instructions and operations included within data transfer session object 22c so that the data transfer session object 22c negotiates with computer 20 to decide upon the particular protocol to use for the data transfer session, and in turn provide computer 20, through data transfer session object 22c, with the operations, instructions and data necessary to enable computer 20 to retrieve and understand the data transferred through the data transfer session object 22c. Further, computer 20 and PDA 22 may negotiate on a preferred physical transport medium, if one is available. For instance, if a shared FireWire, IR or a Bluetooth connection is found to link computer 20 and PDA 22 together it could be used instead of an Ethernet connection as the physical transport medium to transfer the data. The instructions may also include operations for scaling down data rates over slow data transmission links, or may include operations for increasing redundancy in the face of errors during a data transfer session.

Moreover, data transfer session object 22c may include instructions that may be performed by computer 20 to enable it to view the type of data being transferred through data transfer session object 22c. For instance, where computer 20 is not programmed or configured to display "JPEG" image files, or streaming video data transfers transmitted from PDA 22, for example, computer 20 may perform the instructions included in data transfer session object 22c to view, on a display device associated with computer 20, for example, the data being transferred. In particular, data transfer session object 22c may include a getViewer() operation that returns a viewer object when the operation is invoked by computer 20. The viewer object is specific to the particular type of data that is understood and used by PDA 22. Further, the viewer object may include the same instructions described above for providing computer 20 with a user interface except that the instructions, when performed by computer 20, enable computer 20 to view the data being transferred. The viewer object may also include instructions for enabling computer 20 to view the particular data type associated with PDA 22 and being transferred despite computer 20 not being previously programmed to view such types of data. In addition, the getViewer() operation may be passed parameters, as described above with respect to the user interface, for enabling computer 20 to specify the type of user window (i.e., graphical or speech) computer 20 would like to display. In this example, the getViewer() operation may be stored in PDA 22 and accessible to computer 20 through data object 22b. Alternatively or in addition, the getViewer() operation may be stored in a central repository, such as in server 23 (FIG. 1). In this example, the server 23 may store one or more getViewer() operations, where each operation includes instructions for enabling computer 20 to view a particular type of data. It should be appreciated that the terms "view" or "display" in this example may encompass other forms of output, such as where the instructions in data transfer session object 22c enable computer 20 to play an audio file in a particular format through an audio output device such as a speaker. Furthermore, data transfer session object 22c may include additional operations, such as a getEditor() operation and a getPrinter() operation, which have the same instructions as the getViewer() operation except the getEditor() operation and the getPrinter() operation include instructions for enabling computer 20 to edit or print, respectively, data being transferred, regardless of whether computer 20 has been programmed to understand the particular type of data associated with PDA 22. Thus, in this embodiment computer 20 would not need to understand all of the types of data formats it may encounter in a data transfer session because the instructions to understand such data may be included in data transfer session object 22c. It should be noted that computer 20 at least has the capability of executing the various instructions and operations included within data transfer session object 22c.

In this illustrative example, the abort() operation includes instructions that enable computer 20 to terminate the data transfer session with PDA 22. Further, computer 20 may indicate to PDA 22 that a data transfer session has failed or has been completed by performing the fail() operation or the complete() operation, respectively. In the event that a data transfer session between computer 20 and PDA 22 has failed, completed, or aborted, listeners at components 20-24 who expressed an interest in the status of the data transfer session by registering will be notified of the event through the register() operation. A signaling protocol enables computer 20 to indicate when computer 20 has completed using the data transfer session object 21c in the case where PDA 22 cannot automatically determine when computer 20 is finished such as where the data transfer session has an indeterminate duration (e.g., streaming video). The getLease() operation enables computer 20 to renew the lease according to the initial lease duration parameter to ensure the data transfer session remains active.

Referring to FIG. 4 at step 40, computer 20 performs a discovery process to determine whether computer 20 and PDA 22 can transfer data between each other. In this embodiment, computer 20 discovers PDA 22 using a variety of discovery systems such as the Bluetooth™ Service Location Protocol ("SLP") developed by Bluetooth SIG, inc., described in "Specification of the Bluetooth System," Version 1.1 core, Bluetooth Consortium 2001, the Universal Description, Discovery, and Integration Protocol ("UDDI"), developed by the Ariba, IBM and Microsoft Corps., described in "UDDI Technical Whitepaper," Universal Description, Discovery, and Integration Consortium, pp. 1-12, 2000; "Universal Description, Discovery and Integration Data Structure Reference V 1.0," Ariba, Inc., International Business Machines Corporation and Microsoft Corporation, pp. 1-31, 2000; "Universal Description, Discovery and Integration Programmer's API 1.0," Ariba, Inc. and International Business Machines Corporation and Microsoft Corporation, pp. 1-67, 2000; and "Universal Description, Discovery and Integration Technical White Paper," Ariba, Inc., International Business Machines Corporation and Microsoft Corporation, pp. 1-12, 2000, the various Jini™ system discovery protocols or simple lookup in a name server, for example, all of which are hereby incorporated by reference in their entirety. Discovered PDA 22 returns data object 22b to computer 20. Computer 20 may introspect the received data object 22b to determine which one or more interfaces are associated with PDA 22. Thus, upon computer 20 performing the above-described discovery and receiving data object 22b from PDA 22, computer 20 introspects the received data object 22b to determine which universal interfaces PDA 22 is associated with. Computer 20 determines that PDA 22 is at least associated with a data source interface, and thus PDA 22 can provide it with data. Computer 20 invokes the data source interface associated with PDA 22 and included in data object 22b, which includes instructions that instruct computer 20 to perform the getSourceDataFlavors() operation included in data object 22b. The getSourceDataFlavors() operation in turn includes instructions for accessing PDA 22 to provide computer 20 with the types of data supported by PDA 22.

Next, at step 42 computer 20 performs the beginTransferSession() operation included in the data source interface. In addition, the beginTransferSession() operation when invoked may be passed the context parameter, the initial lease duration parameter and the data flavor parameter. PDA 22 returns the data transfer session object 22c to computer 20. Computer 20 may determine a preferred data type using the methods described above and provide a preferred data type value to receive the data in to the data flavor parameter, otherwise computer 20 will receive the data in whichever data format it is provided in by PDA 22. Computer 20 may receive data from PDA 22 by way of the data transfer session object 22c.

Next, at step 44 data transfer session object 22c includes the getTransferData() operation and the other operations and instructions described above that may be performed by computer 20 to retrieve data from PDA 22. The data is transferred from PDA 22 to computer 20 through data transfer session object 21c at step 46. Still further, computer 20 may be able to view data types that it is not natively programmed to understand. When computer 20 performs the beginTransferSession() operation, PDA 22 may return the instructions, operations or data directly to computer 20 to enable it to understand the data being transferred from PDA 22.

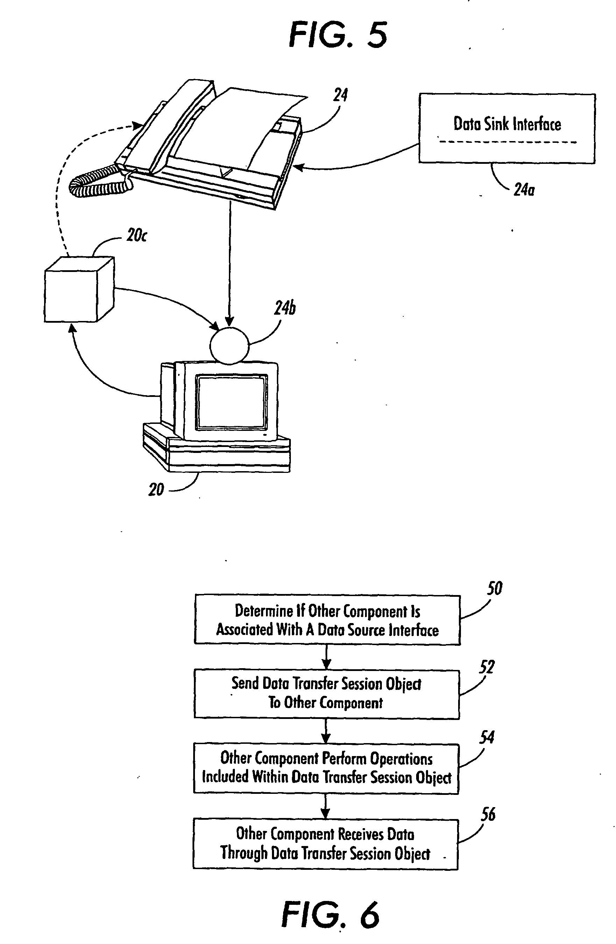

Referring to FIG. 5, computer 20 is coupled to facsimile machine 24 as described above in connection with FIG. 1. Facsimile machine 24 has stored in a memory, or otherwise has access to by accessing server 23, for example, a set of universal interfaces 24a comprising a data sink interface, which will be described in further detail herein. However, facsimile machine 24 may be associated with any number of interfaces and in any combination.

Facsimile machine 24 may access the set of universal interfaces 24a through data object 24b to effect different types of communications. Each of the interfaces in the set of universal interfaces 24a comprise instructions, sets of operations and/or other data that can be understood and performed by computer 20 to enable it to communicate and transfer data with facsimile machine 24. Except for the data sink interface, each of the interfaces mentioned above are the same as those described above in connection with PDA 22, but each interface includes instructions that are specific to the particular device they are associated with (i.e., facsimile machine 24).

In particular, the data sink interface includes several operations such as a getSinkDataFlavor() and a Transfer() operation. Further, the data sink interface includes instructions and data that can be performed by computer 20 for establishing a data transfer session to enable computer 20 to transmit data to facsimile machine 24. In particular, the getSinkDataFlavor() operation includes instructions and data that may be performed by computer 20 for determining which types of data facsimile machine 24 can support. In this particular embodiment, computer 20 may perform the getSinkDataFlavor() operation which returns a list of one or more data types supported by facsimile machine 24. Moreover, the data types in this embodiment are typically MIME data types. The Transfer() operation includes instructions and data that may be performed by computer 20 to request facsimile machine 24 to establish a data transfer session so computer 20 can begin transmitting data to facsimile machine 24. The Transfer() operation may be passed parameters in this embodiment when invoked such as data transfer session object 20c associated with computer 20, a context parameter and a data flavor parameter. In particular, computer 20 passes the data transfer session object 20c into the Transfer() operation to make it available to facsimile machine 24 so it may perform the instructions therein to actually receive the data from computer 20. In this embodiment, the data transfer session object 20c associated with computer 20 includes the same types of instructions, data and operations as data transfer session object 22c described above, except that the instructions, data and operations included therein are particular to computer 20. Computer 20 passes a context parameter into the Transfer() operation when invoking it to inform facsimile machine 24 of its identity for a variety of reasons, such as for security purposes. Facsimile machine 24 may decide whether to allow computer 20 to transmit data to it based upon the identity information provided in the context parameter. In addition, if facsimile machine 24 supports one or more types of data, as determined by performing the getSinkDataFlavor() operation, a data flavor parameter may be passed into the Transfer() operation to inform facsimile machine 24 the type of data that will be transmitted by computer 20. Moreover, computer 20 may provide a preferred data type value to the data flavor parameter for a number of reasons, such as in the event computer 20 and facsimile machine 24 support multiple, compatible data types where computer 20 specifies, using the parameter, a preferred data type for the data transfer. In this embodiment, computer 20 may determine a preferred data type using a number of methods such as enabling users at computer 20 to indicate preferred data types, randomly selecting one of the compatible data types between computer 20 and facsimile machine 24 or selecting the data type that will be most efficient for the particular data being transferred. Additionally, where computer 20 and facsimile machine 24 support a finite number of compatible data types with respect to each other, computer 20 may select the compatible data type to transmit the data to facsimile machine 24.

Referring to FIG. 6, at step 50 computer 20 performs the discovery process and determines by introspecting data object 24b, as described above in connection with one or more alternatives, that computer 20 and facsimile machine 24 can transfer data between each other because facsimile machine 24 is at least associated with a data sink interface. Computer 20 invokes the data sink interface associated with facsimile machine 24 and included in data object 24b, which includes instructions that instruct computer 20 to perform the getSinkDataFlavor() operation. The getSinkDataFlavor() operation in turn includes instructions for accessing facsimile machine 24 to provide computer 20 with the types of data supported by facsimile machine 24, as described above.

Next, at step 52 computer 20 performs the Transfer() operation included in the data sink interface. In addition, computer 20 passes into the Transfer() operation data object 20c, the context parameter and the data flavor parameter when invoked as described above.

Next, at step 54 facsimile machine 24 performs the instructions included within data transfer session object 20c as provided to it through the Transfer() operation to receive data from computer 20. The data is transferred from computer 20 to facsimile machine 24 by way of data transfer session object 20c at step 56.

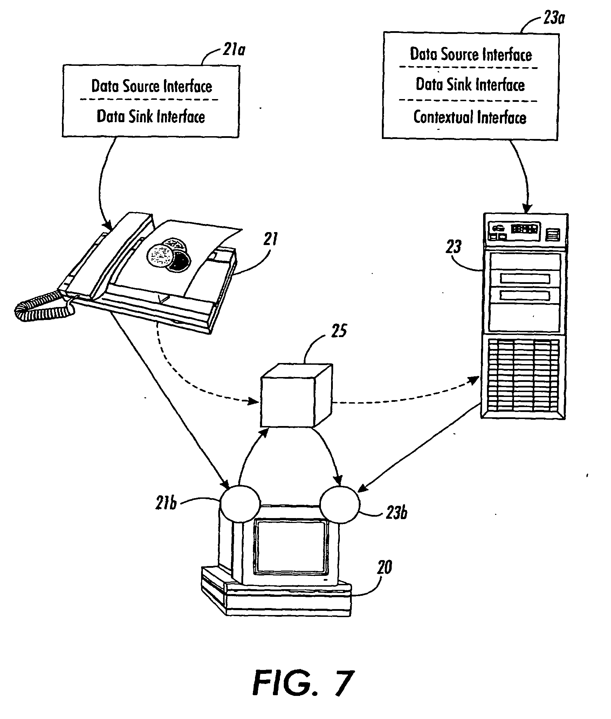

Referring to FIG. 7, computer 20, printer 21 and server 23 are coupled to each other as described above in connection with FIG. 1. In this embodiment, printer 21 is associated with a set of universal interfaces 21a comprising a data source interface, a data sink interface and a contextual interface. Server 23 is associated with a set of universal interfaces 23a comprising a data source interface, a data sink interface and a contextual interface. Each of the interfaces mentioned above are the same as those described above in connection with FIGS. 3 and 5, except that each interface in this embodiment includes instructions that are specific to the particular device they are associated with (i.e., printer 21 or server 23). Moreover, the data transfer session object 25 associated with printer 21 includes the same instructions, data and operations as data transfer session objects 20c and 22c as described above, except that the instructions, data and operations included therein are particular to printer 21.

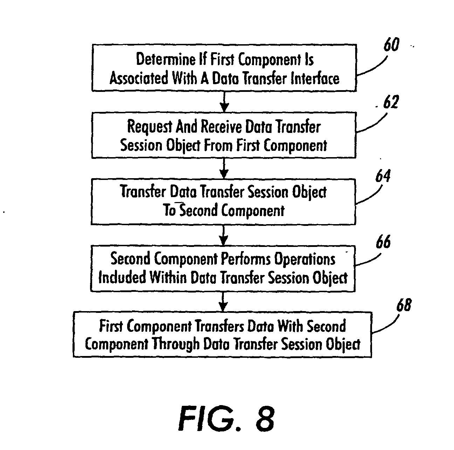

Referring to FIG. 8, at step 60 computer 20 performs the discovery process and determines by introspecting data objects 21b and 23b, as described above in connection with one or more alternatives, that printer 21 and server 23 can transfer data between each other because printer 21 is associated with a data source interface and server 23 is associated with a data sink interface. Computer 20 invokes the data source interface associated with printer 21 and performs the getSourceDataFlavors() operation included in data object 21 b to access printer 21 to determine the types of data supported by printer 21, as described above.

Next, at step 62 computer 20 performs the beginTransferSession() operation included in the data source interface. In addition, the beginTransferSession() operation may be passed the context parameter associated with computer 20 or server 23. For instance, computer 20 may invoke the contextual interface associated with server 23 and accessible through data object 23b. In this example, computer 20 would receive the contextual information from server 23 but in turn provide it to printer 21 through the beginTransferSession() operation. This enables printer 21 to decide whether it would like to transfer the data with server 23. Alternatively, computer 20 may provide its own contextual information to printer 21 for the same reasons as well as the initial lease duration parameter when invoked as described above. Computer 20 invokes the data sink interface associated with server 23 and included in data object 23b, which includes instructions that instruct computer 20 to perform the getSinkDataFlavor() operation. The getSinkDataFlavor() operation in turn includes instructions for accessing server 23 to provide computer 20 with the types of data supported by server 23. In addition, if server 23 supports one or more types of data, as determined by performing the getSinkDataFlavor() operation, a data flavor parameter may be passed into the Transfer() operation to inform server 23 the type of data that will be transmitted to it. Moreover, computer 20 may provide a preferred data type value to the data flavor parameter for a number of reasons, such as in the event printer 21 and server 23 support multiple, compatible data types where computer 20 specifies, using the parameter, a preferred data type for the data transfer between printer 21 and server 23. Printer 21 returns the data source object 25 to computer 20 through data object 21 b.

Next, at step 64 computer 20 performs the Transfer() operation included in the data sink interface associated with server 23 and included in data object 23b. The Transfer() operation may also be passed parameters when invoked, including the data source object 25 received by computer 20 from printer 21, a context parameter and/or the data flavor parameter associated with printer 21. Computer 20 provides to server 23 the context parameter associated with computer 20 and/or printer 21 so that server 23 may decide whether it would like to participate in the data transfer for a number of reasons, such as for security purposes. Computer 20 is able to provide server 23 with its own contextual information by performing its own instructions to obtain its contextual information and passing the information into the Transfer() operation via the context parameter. Server 23 may receive data from printer 21 by way of the data transfer session object 25 received from computer 20 from printer 21 and transferred to server 23 from computer 20 through the Transfer() operation.

Next, at step 66 server 23 performs the getTransferData() operation included in data transfer session object 25 to retrieve data from printer 21. The data is transferred from printer 21 to server 23 through data transfer session object 25 at step 68. In this example, one or more of computer 20, printer 21 or server 23 may access and perform the abort() operation, fail() operation or the complete() operation described above and included in the data transfer session object 25. Also, one or more of computer 20, printer 21 or server 23 may be held responsible for renewing the leased data transfer session. In another alternative, one or more of computer 20, printer 21 or server 23 may register as a listener with each other by invoking the notification interface (not illustrated) associated with computer 20, printer 21 or server 23 to receive event notifications, as described above. In this example, computer 20 may invoke the notification interface associated with printer 21 and/or server 22 to register as a listener to monitor the progress of the data transfer. During the data transfer session between printer 21 and server 22 the participation of computer 20 is not required. Whether or not computer 20 continues to participate in the data transfer session depends upon several factors, such as whether computer 20 would like to receive event notifications associated with the data transfer sessions and whether computer 20 is responsible for renewing the leased data transfer session, as described above.

In another alternative, any one of computer 20, printer 21 or server 23 may serve as data sources and data sinks between each other employing one or more of the above-described alternative. For instance, computer 20 may initiate a data transfer where server 23 serves as a data source and thus transmits data to printer 21 via data object transfer session 25 following the same steps as described above with respect to printer 21 transmitting data to server 23.

While devices such as computer 20, printer 21, PDA 22, server 23 and facsimile machine 24 (i.e., components 20-24) have been used as examples in one or more alternatives described above, a number of other systems may be used as components 20-24 such as software services, applications or portions thereof including language translation services, data format converters, e-mail applications, calendar applications, or a spell checking routine executing within a word processing application. For instance, a word processor could make currently selected text available as a data source component so that it could be sent to PDA 22, which is a data sink component.

The recited order of processing elements or sequences may be different in further alternatives.

## Claims

1. A system for enabling components (20-24) to transfer data between each other, the system comprising:
a first component having a data transfer session object; and
a second component;
**characterized in that**
said components are configured to transfer a data transfer session object from said first component to said second component, wherein said data transfer session object comprises operations to be performed within said second component or within other components to transfer data between said first component and said second component or said other components, respectively.

2. The system as set forth in claim 1 wherein the data transfer session object has source-specific object-oriented mobile code that can be interpreted and performed by the second component to receive data.

3. The system as set forth in claim 1 or 2 wherein the data transfer session object comprises instructions for enabling the second component to negotiate with said first component to transfer data, for selecting a communications protocol to use to transfer data between said first and second components based upon a type of data being transferred or for selecting a transfer medium to use to transfer data based upon the type of data.

4. The system as set forth in one of the claims 1 to 3 wherein said data transfer session object comprises instructions to terminate data transfer upon the second component failing to renew a data transfer lease or indicating that the data transfer has completed or failed.

5. The system according to one of the claims 1 to 3, further comprising:
a third component, wherein said components are configured to transfer said data transfer session object first from said first component to said third component and then from said third component to said second component.

6. The system as set forth in claim 5 wherein data transfer ceases upon the third component failing to renew a data transfer lease or indicating that the data transfer has completed or failed.

7. A method for enabling components (20-24) to transfer data between each other, the method comprising:
(a) transferring a data transfer session object from a first component to a second component; and
(b) performing, within said second component, operations included with said data transfer session object to transfer data between said first component and said second component.

8. The method according to claim 7, further comprising, prior to step (a), the steps of:
(c) starting a discovery process from said second component;
(d) transferring, as a response to step (c), a data object from said first component to said second component;
(e) performing, within said second component, operations included with said data object to request from said first component the transfer of said data transfer session object.

9. The method according to claim 7, further comprising, prior to step (a), the steps of:
(f) starting a discovery process from said first component;
(g) transferring, as a response to step (c), a data object from said second component to said first component;
(h) performing, within said first component, operations included with said data object to request from said second component information about types of data supported by said second component.

10. The method according to claim 7, further comprising, prior to step (a), the steps of:
(i) starting a discovery process from a third component;
(k) transferring, as a response to step (i), a data object from said first component to said third component and a data object from said second component to said third component;
(l) performing, within said first component, operations included with the data object transferred from said first component, to request from said first component information about types of data supported by said first component;
(m) performing, within said first component, operations included with the data object transferred from said second component, to request from said second component information about types of data supported by said second component;
(n) transferring the data object previously transferred from said first component to said third component, from said third component on to said second component.

11. The method of one of the claims 7 to 10, adapted to operate the system of one of claims 1 to 6.

12. A computer readable medium having stored thereon instructions that when executed by a computer causes the computer to perform the method of one of claims 7 to 10.

## Patentansprüche

1. System für das Befähigen von Komponenten (20-24) Daten zwischen einander zu transferieren, wobei das System umfasst:
eine erste Komponente die über ein Daten-Transfer-Session-Objekt verfügt; und
eine zweite Komponente;
**dadurch gekennzeichnet, dass**
diese Komponenten dafür konfiguriert sind, ein Daten-Transfer-Session-Objekt von der ersten Komponente zu der zweiten Komponente zu transferieren, wobei das Daten-Transfer-Session-Objekt Befehle beinhaltet, die innerhalb der zweiten Komponente oder innerhalb anderer Komponenten auszuführen sind, um jeweils Daten zwischen der ersten Komponente und der zweiten Komponente oder den anderen Komponenten zu transferieren.

2. System gemäß Anspruch 1, wobei das Daten-Transfer-Session-Objekt über quellenspezifischen objektorientierten mobilen Code verfügt, der durch die zweite Komponente interpretiert und ausgeführt werden kann, um Daten zu empfangen.

3. System gemäß Anspruch 1 oder 2, wobei das Daten-Transfer-Session-Objekt Anweisungen beinhaltet, um die zweite Komponente zu befähigen, mit der ersten Komponente über das Transferieren von Daten zu verhandeln, für das Selektieren eines Kommunikationsprotokolls, das genutzt wird, Daten zwischen der ersten und der zweiten Komponente zu transferieren, basierend auf einem Typ von Daten die transferiert werden, oder für das Selektieren eines Übertragungsmediums, das benutzt wird, um Daten zu transferieren, basierend auf dem Typ von Daten.

4. System gemäß einem der Ansprüche 1 bis 3, wobei das Daten-Transfer-Session-Objekt Anweisungen beinhaltet, den Datentransfer zu beenden, wenn die zweite Komponente darin versagt, eine Datentransferfreigabe zu erneuern oder anzeigt, dass der Datentransfer komplettiert wurde oder fehlgeschlagen ist.

5. System gemäß einem der Ansprüche 1 bis 3, weiterhin umfassend:
eine dritte Komponente, wobei die Komponenten dafür konfiguriert sind, das Daten-Transfer-Session-Objekt zuerst von der ersten Komponente zu der dritten Komponente zu transferieren und dann von der dritten Komponente zu der zweiten Komponente zu transferieren.

6. System gemäß Anspruch 5, wobei der Datentransfer endet, wenn die dritte Komponente darin versagt, eine Datentransferfreigabe zu erneuern oder anzeigt, dass der Datentransfer komplettiert wurde oder fehlgeschlagen ist.

7. Verfahren für das Befähigen von Komponenten (20-24) Daten zwischen einander zu transferieren, wobei das Verfahren umfasst:
(a) Transferieren eines Daten-Transfer-Session-Objekts von einer ersten Komponente zu einer zweiten Komponente; und
(b) Ausführen, innerhalb der zweiten Komponente, von Befehlen, die in dem Daten-Transfer-Session-Objekt enthalten sind, um Daten zwischen der ersten Komponente und der zweiten Komponente zu transferieren.

8. Verfahren gemäß Anspruch 7, weiterhin umfassend, vor dem Schritt (a) die Schritte:
(c) starten eines Ermittlungsprozesses von der zweiten Komponente;
(d) Transferieren, als eine Antwort zu Schritt (c), eines Datenobjekts von der ersten Komponente zu der zweiten Komponente;
(e) Ausführen, innerhalb der zweiten Komponente, von Befehlen, die in dem Datenobjekt enthalten sind, um von der ersten Komponente den Transfer des Daten-Transfer-Session-Objekts anzufordern.

9. Verfahren gemäß Anspruch 7, weiterhin umfassend, vor dem Schritt (a), die Schritte:
(f) Starten eines Ermittlungsprozesses von der ersten Komponente;
(g) Transferieren, als eine Antwort zu Schritt (c), eines Datenobjekts von der zweiten Komponente zu der ersten Komponente;
(h) Ausführen, innerhalb der ersten Komponente, von Befehlen, die in dem Datenobjekt enthalten sind, um von der zweiten Komponente Informationen über die Typen von Daten anzufordern, die von der zweiten Komponente unterstützt werden.

10. Verfahren nach Anspruch 7, weiterhin umfassend, vor dem Schritt (a), die Schritte:
(i) Starten eines Ermittlungsprozesses von einer dritten Komponente;
(k) Transferieren, als eine Antwort zu Schritt (i), eines Datenobjekts von der ersten Komponente zu der dritten Komponente und eines Datenobjekts von der zweiten Komponente zu der dritten Komponente;
(l) Ausführen, innerhalb der ersten Komponente, von Befehlen, die in dem Datenobjekt enthalten sind, das von der ersten Komponente transferiert wurde, um von der ersten Komponente Informationen über die Typen von Daten anzufordern, die von der ersten Komponente unterstützt werden;
(m) Ausführen, innerhalb der ersten Komponente, von Befehlen, die in dem Datenobjekt enthalten sind, das von der zweiten Komponente transferiert wurde, um von der zweiten Komponente Informationen über die Typen von Daten anzufordern, die von der zweiten Komponenten unterstützt werden;
(n) Transferieren des Datenobjekts, das vorher von der ersten Komponente zu der dritten Komponente transferiert wurde, von der dritten Komponente weiter zu der zweiten Komponente.

11. Verfahren gemäß einem der Ansprüche 7 bis 10, dafür adaptiert, das System eines der Ansprüche 1 bis 6 zu betreiben.

12. Ein computerlesbares Medium, auf dem Anweisungen gespeichert sind, die, wenn sie von einem Computer ausgeführt werden, den Computer veranlassen, das Verfahren nach einem der Ansprüche 7 bis 10 auszuführen.

## Revendications

1. Système pour permettre à des composants (20 à 24) de transférer des données entre eux, le système comprenant :
un premier composant ayant un objet de session de transfert de données ; et
un second composant ;
**caractérisé en ce que**
lesdits composants sont configurés pour transférer un objet de session de transfert de données dudit premier composant au dit second composant, dans lequel ledit objet de session de transfert de données comprend les opérations qui doivent être effectuées à l'intérieur dudit second composant ou à l'intérieur des autres composants pour transférer les données entre ledit premier composant et ledit second composant ou lesdits autres composants, respectivement.

2. Système selon la revendication 1, dans lequel l'objet de session de transfert de données comporte un code mobile orienté objet spécifique à la source qui doit être interprété et exécuté par le second composant pour recevoir les données.

3. Système selon la revendication 1 ou 2, dans lequel l'objet de session de transfert de données comprend des instructions pour permettre au second composant de négocier avec ledit premier composant pour transférer les données, pour sélectionner un protocole de communication à utiliser et pour transférer les données entre lesdits premier et second composants sur la base d'un type de données qui doit être transféré ou pour sélectionner un support de transfert à utiliser pour transférer les données sur la base du type de données.

4. Système selon l'une quelconque des revendications 1 à 3, dans lequel l'objet de session de transfert de données comprend des instructions pour terminer le transfert de données lorsque ledit second composant échoue à renouveler une location de transfert de données ou à indiquer que le transfert de données s'est terminé ou a échoué.

5. Système selon l'une quelconque des revendications 1 à 3, comprenant en outre :
un troisième composant, dans lequel lesdits composants sont configurés pour transférer ledit objet de session de transfert de données tout d'abord dudit premier composant au dit troisième composant et ensuite dudit troisième composant au dit second composant.

6. Système selon la revendication 5, dans lequel le transfert de données cesse lorsque le troisième composant échoue à renouveler une location de transfert de données ou indiquer que le transfert de données s'est terminé ou a échoué.

7. Procédé pour permettre à des composants (20 à 24) de transférer des données entre eux, le procédé comprenant les étapes consistant à :
(a) transférer un objet de session de transfert de données d'un premier composant à un second composant ; et
(b) effectuer, à l'intérieur dudit second composant, les opérations incluses dans ledit objet de session de transfert de données pour transférer les données entre ledit premier composant et ledit second composant.

8. Procédé selon la revendication 7, comprenant en outre, avant l'étape (a), les étapes consistant à :
(c) lancer un traitement de découverte à partir dudit second composant ;
(d) transférer, comme réponse à l'étape (c), un objet de données dudit premier composant au dit second composant ;
(e) effectuer, à l'intérieur dudit second composant, des opérations incluses dans ledit objet de données pour demander au dit premier composant le transfert dudit objet de session de transfert de données.

9. Procédé selon la revendication 7, comprenant en outre, avant l'étape (a), les étapes consistant à :
(f) lancer un traitement de découverte depuis ledit premier composant ;
(g) transférer, comme réponse à l'étape (c), un objet de données dudit second composant au dit premier composant.
(h) effectuer, à l'intérieur dudit premier composant, les opérations incluses dans ledit objet de données pour demander au dit second composant des informations concernant les types de données supportés par ledit second composant.

10. Procédé selon la revendication 7, comprenant en outre, avant l'étape (a), les étapes consistant à :
(i) lancer un traitement de découverte depuis un troisième composant ;
(k) transférer, comme réponse à l'étape (i) un objet de données dudit premier composant au dit troisième composant et un objet de données dudit second composant au dit troisième composant ;
(l) effectuer, à l'intérieur dudit premier composant, les opérations incluses dans l'objet de données transféré dudit premier composant, pour demander depuis ledit premier composant des informations concernant les types de données supportés par ledit premier composant ;
(m) effectuer, à l'intérieur dudit premier composant, les opérations incluses dans l'objet de données transféré dudit second composant, pour demander à partir dudit second composant les informations concernant les types de données supportés par ledit second composant ;
(n) transférer l'objet de données précédemment transféré dudit premier composant au dit troisième composant, dudit troisième composant au dit second composant.

11. Procédé selon l'une quelconque des revendications 7 à 10, adapté pour mettre en oeuvre le système selon l'une quelconque des revendications 1 à 6.

12. Support lisible par ordinateur ayant mémorisé dans celui-ci des instructions qui lorsque exécutées par un ordinateur amène l'ordinateur à mettre en oeuvre le procédé selon l'une quelconque des revendications 7 à 10.
